(19) Europäisches Patentamt / European Patent Office / Office européen des brevets

(11) **EP 2 357 803 A1**

(12) **EUROPEAN PATENT APPLICATION**

(43) Date of publication:
**17.08.2011 Bulletin 2011/33**

(51) Int Cl.:
***H04N 5/445*** (2011.01)

(21) Application number: **10186230.8**

(22) Date of filing: **01.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Kasano, Koji**<br>  **Tokyo 105-8001 (JP)**<br>• **Uehara, Tatsuya**<br>  **Tokyo 105-8001 (JP)** |
| (30) Priority: **21.12.2009 JP 2009289584** | (74) Representative: **Henkel, Feiler & Hänzel**<br>**Patentanwälte**<br>**Maximiliansplatz 21**<br>**80333 München (DE)** |
| (71) Applicant: **Kabushiki Kaisha Toshiba**<br>**Minato-ku**<br>**Tokyo 105-8001 (JP)** | |

(54) **Display device and display method**

(57) According to one embodiment, a display device includes a storage module (152), an operation module (101), an item determination module (109), a relation calculator (104), and a display module (170). The storage module (152) stores contents and metadata corresponding to the contents. The operation module (101) receives operation to specify key information. The item determination module (109) determines, according to the type of the key information, items to calculate relation between the key information and each of second contents other than the key information. The relation calculator (104) calculates the relation according to similarity in the metadata with respect to each of the items. The display module (170) displays a display screen divided into areas each corresponding to one of the items, in which the key information is arranged at the center and each of the second contents is arranged in corresponding one of the areas according to the relation.

FIG.9

**Description**

FIELD

Embodiments described herein relate generally to a display device and a display method.

BACKGROUND

In recent years, with increased capability of AV equipment for storing contents and improved seamless accessibility of contents between equipment, let alone within the same equipment, or on a network, there has been a proliferation in the number of contents accessible to users. In this regard, for example, Japanese Patent Application Publication (KOKAI) No. 2009-80580 discloses a conventional display device that facilitates the retrieval of content from numerous contents. When a user specifies one content as a search key, the conventional display device displays contents related to the key content with respect to each item in a direction such that content with higher relation is closer to the center.

The conventional display device does not display the related contents in different directions with respect to appropriate items according to the type of the key content. If the key content is music content such as "karaoke" content, appropriate items may be, for example, "vocal range (key)", "generation", "keyword", "singer", and the like. If the key content is still image content, appropriate items may be, for example, "person", "place", "date", "keyword", and the like. If the key content is product content, appropriate items may be, for example, "name", "keyword", "category", "brand", and the like. There is a need for a technology to display related contents in different directions with respect to such items.

It is therefore an object of the invention to provide a display device and a display method capable of displaying related contents in different directions with respect to appropriate items according to the type of key information for search.

SUMMARY

To overcome the problems and achieve the object mentioned above, according to an embodiment, a display device comprises a storage module, an operation module, an item determination module, a relation calculator, and a display module. The storage module is configured to store a plurality of contents and metadata corresponding to each of the contents. The operation module is configured to receive operation to specify key information as a search key. The item determination module is configured to determine, according to the type of the key information, items with respect to which relation between the key information and each of second contents other than the key information is to be calculated. The relation calculator is configured to calculate the relation according to similarity in metadata of the key information and each of the second contents with respect to each of the items. The display module is configured to display a display screen that is radially divided from the center into predetermined areas each corresponding to one of the items, in which the key information is arranged at the center and each of the second contents is arranged in corresponding one of the predetermined areas according to the relation.

According to another embodiment, a display device comprises an operation module, an item determination module, and a display module. The operation module is configured to receive operation to specify key information as a search key. The item determination module is configured to determine, according to the type of the key information, items with respect to which relation between the key information and each of second contents other than the key information is to be calculated. The display module is configured to display a display screen that is radially divided from the center into predetermined areas each corresponding to one of the items, in which the key information is arranged at the center and each of the second contents is arranged in corresponding one of the predetermined areas according to the relation.

According to still another embodiment, there is provided a display method applied to a display device comprising a storage module configured to store a plurality of contents and metadata corresponding to each of the contents. The display method comprises: an operation module receiving operation to specify key information as a search key; an item determination module determining, according to the type of the key information, items with respect to which relation between the key information and each of second contents other than the key information is to be calculated; a relation calculator calculating the relation according to similarity in metadata of the key information and each of the second contents with respect to each of the items; and a display module displaying a display screen that is radially divided from the center into predetermined areas each corresponding to one of the items, in which the key information is arranged at the center and each of the second contents is arranged in corresponding one of the predetermined areas according to the relation.

As described above, according to an embodiment, it is possible to display related contents in different directions with respect to appropriate items according to the type of key information for search.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary block diagram of a display device according to an embodiment;
FIG. 2 is an exemplary schematic diagram of metadata when a television (TV) program is content in the embodiment;
FIG. 3A is an exemplary schematic diagram of display information indicating the details of content in the embodiment;
FIG. 3B is another exemplary schematic diagram of display information indicating the details of content in the embodiment;
FIG. 4A is an exemplary schematic diagram for explaining the operation of displaying the display information in the embodiment;
FIG. 4B is another exemplary schematic diagram for explaining the operation of displaying the display information in the embodiment;
FIG. 5 is still another exemplary schematic diagram for explaining the operation of displaying the display information in the embodiment;
FIG. 6 is still another exemplary schematic diagram for explaining the operation of displaying the display information in the embodiment;
FIG. 7 is still another exemplary schematic diagram for explaining the operation of displaying the display information in the embodiment;
FIG. 8 is still another exemplary schematic diagram for explaining the operation of displaying the display information in the embodiment;
FIG. 9 is an exemplary schematic diagram of list information in which are arranged display information of key content and that of other contents in the embodiment;
FIG. 10 is an exemplary flowchart of the operation of the display device in the embodiment;
FIG. 11 is an exemplary schematic diagram of a display screen in the embodiment;
FIG. 12 is an exemplary schematic diagram of a list display screen in the embodiment;
FIG. 13 is an exemplary schematic diagram of display when key content is "karaoke" content in the embodiment;
FIG. 14 is an exemplary schematic diagram of display when key content is still image content in the embodiment;
FIG. 15 is an exemplary schematic diagram of display when key content is product content in the embodiment; and
FIG. 16 is an exemplary schematic diagram of display when a search keyword is input in the embodiment.

DETAILED DESCRIPTION

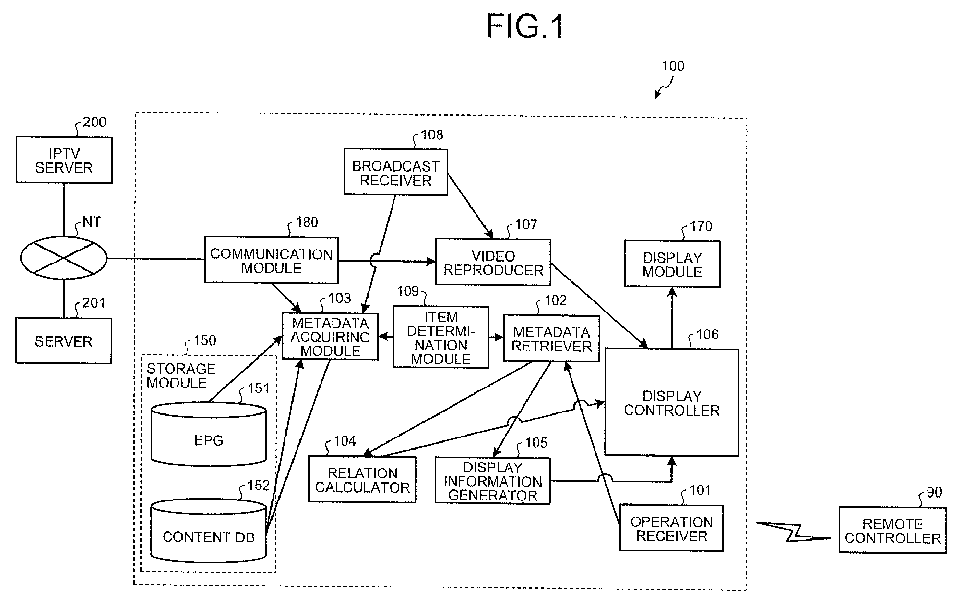

Various embodiments will be described hereinafter with reference to the accompanying drawings.
Although a display device of an embodiment is described below as being applied to a television (TV), this is by way of example only and is not to be construed to be limiting. The display device may be applied to any device capable of displaying video such as a personal computer and the like. Briefly, in the following embodiment, when a user retrieves content related to key information as a search key (key content or keyword) from a plurality of contents, in response to user selection of key information, the display device displays the key information with contents related to the key information.
A description will be given of the functional configuration of a display device 100 according to the embodiment. FIG. 1 is a block diagram of the display device 100. As illustrated in FIG. 1, the display device 100 comprises a storage module 150, a display module 170, a broadcast receiver 108, and a communication module 180. The display device 100 is connected to an Internet protocol television (IPTV) server 200 and a server 201 via a communication network NT.
Although not illustrated in the drawings, the display device 100 further comprises a processor, such as an application-specific integrated circuit (ASIC) or a central processing unit (CPU), and a storage device. Examples of the storage device include a read only memory (ROM) that stores a predetermined computer program for controlling the display device 100 and a random access memory (RAM) that provides a work area for the processor. The cooperation of the processor and the computer program stored in the storage device implements functional modules including an operation receiver 101, a metadata retriever 102, a metadata acquiring module 103, a relation calculator 104, a display information generator 105, a display controller 106, a video reproducer 107, and an item determination module 109.
The IPTV server 200 provides services to distribute video such as TV programs and films using IP. In response to a request from the display device 100, the IPTV server 200 delivers thereto content such as video and metadata of the content. The server 201 is a general server that provides Web and email services. In response to a request from the display device 100, the server 201 may deliver thereto content such as video and metadata of the content.

The communication module 180 is an interface that connects the display device 100 to the IPTV server 200 and the server 201 via the communication network NT.

The storage module 150 is a storage medium such as a hard disk drive (HDD) or a memory that stores an electronic program guide (EPG) 151 and a content database (DB) 152. The storage module 150 obtains an electronic program guide (EPG data) from an external server that manages and distributes the electronic program guide. More specifically, the storage module 150 obtains via the communication module 180 the EPG 151 for TV, cable television (CATV), communications satellite (CS) broadcasting, broadcasting satellite (BS) broadcasting, and the like from the server 201 of a service provider connected through the communication network NT such as the Internet. Thus, the storage module 150 stores the EPG 151. It is assumed herein that the EPG 151 contains information on programs to be broadcasted during a period from the present time to a certain time in the future (e.g., after one week).

The content DB 152 stores content such as video. For example, if the display device 100 is a TV with HDD, the content DB 152 stores video of a recorded TV program as the content. Examples of the content include video in a digital versatile disk (DVD) and video captured by a video camera.

The content DB 152 also stores metadata related to the content in association therewith. The term "metadata" as used herein refers to a set of information indicating unique characteristics of the content. The unique characteristics include the title of the content and the broadcast date and time of the content.

For example, if the content is a TV program, the metadata indicates information (program information) on the TV program such as the title, the channel, the broadcast date and time, the cast, the brief description, and the genre. This metadata is provided to the content DB 152 with the content and stored therein in association with the content. Further, if the content is music content related to music such as "karaoke", the metadata indicates information such as the player, the composer, the lyric writer, the title, the lyrics, a keyword in the lyrics, a histogram indicating the reproduction time for each generation, the vocal range (for example, the highest key, the lowest key, the average key, etc.), and the like. This metadata is provided to the content DB 152 with the content and stored therein in association with the content. If the content is still image content, the metadata indicates, from exchangeable image file format (Exif) information, the photographer, a person such as the object, the shooting date and time, the shooting place, a keyword, and the like. This metadata is provided to the content DB 152 with the content and stored therein in association with the content. If the content is product content, the metadata indicates, the product name, the manufacturer (brand), a keyword, the attribute (category) of the customer (for example, information indicating the generation of customers) and the like. This metadata is provided to the content DB 152 with the content and stored therein in association with the content.

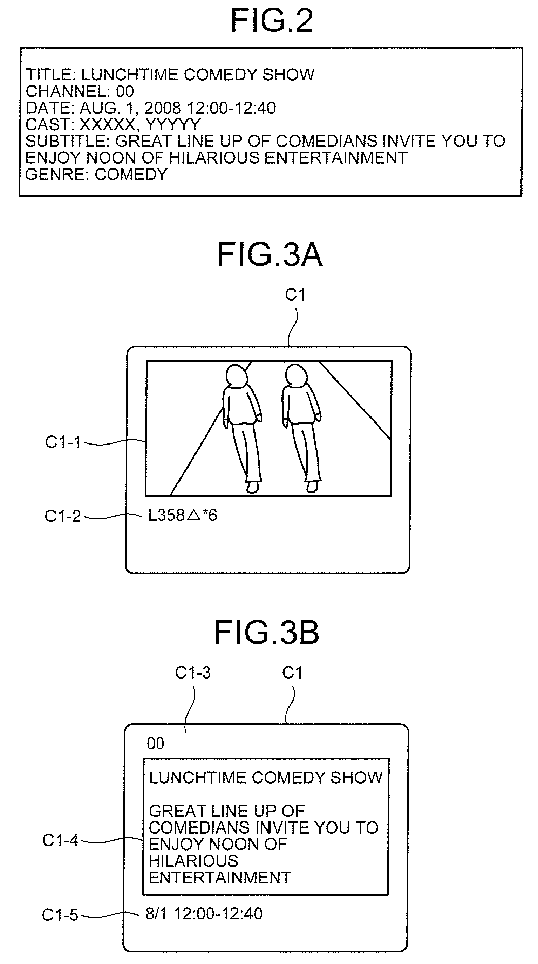

FIG. 2 illustrates the metadata when a TV program is the content. The metadata illustrated in FIG. 2 represents information related to the content of a recorded TV program. The content DB 152 stores as metadata the information, such as the title of the TV program "Lunchtime Comedy Show", the channel "00", the broadcast date and time "August 1, 2008, 12:00 - 12:40", the cast "xxxxx, yyyyy", the subtitle "Great line up of comedians invite you to enjoy a noon of hilarious entertainment", and the genre "comedy".

Although an example is described above in which the metadata is provided as being preset, this is by way of example and not of limitation. The content DB 152 may receive information provided by a user thorough an input device such as a remote controller 90 and store it as metadata in association with the content.

When the metadata of music content such as "karaoke" content does not include information such as a keyword in the lyrics, the vocal range, and the like, the metadata may be acquired from the broadcast receiver 108 or the communication module 180 together with the music content, and the metadata acquiring module 103 may analyze the metadata to obtain the information upon storing it in the content DB 152. More specifically, the metadata acquiring module 103 may divide a lyric contained in the metadata of the music content into wards by morphological analysis, and obtain a frequently-appearing word or the like as a keyword. Besides, the metadata acquiring module 103 may analyze voice or sounds contained in the music content to obtain information related to a vocal range such as the highest key, the lowest key, the average key, and the like.

The display module 170 includes, for example, a liquid crystal display (LCD) for displaying text and an image, and displays content of a received TV program, stored content, an electronic program guide, and the like. The display module 170 also displays display information representing the details of content generated by the display information generator 105, which will be described later, to allow a user to retrieve the content (see FIGS. 3A and 3B).

The broadcast receiver 108 receives the content of video (TV program) broadcasted by TV broadcasting and metadata of the content through an antenna or a cable (not illustrated).

The video reproducer 107 acquires the content of video that a user desires to reproduce. Examples of the content include the content of a TV program, etc. received by the broadcast receiver 108, the content of video acquired from the IPTV server 200 through the communication module 180, and the content of video stored in the content DB 152. The video reproducer 107 decodes (reproduces) the content thus acquired, and outputs it to the display controller 106.

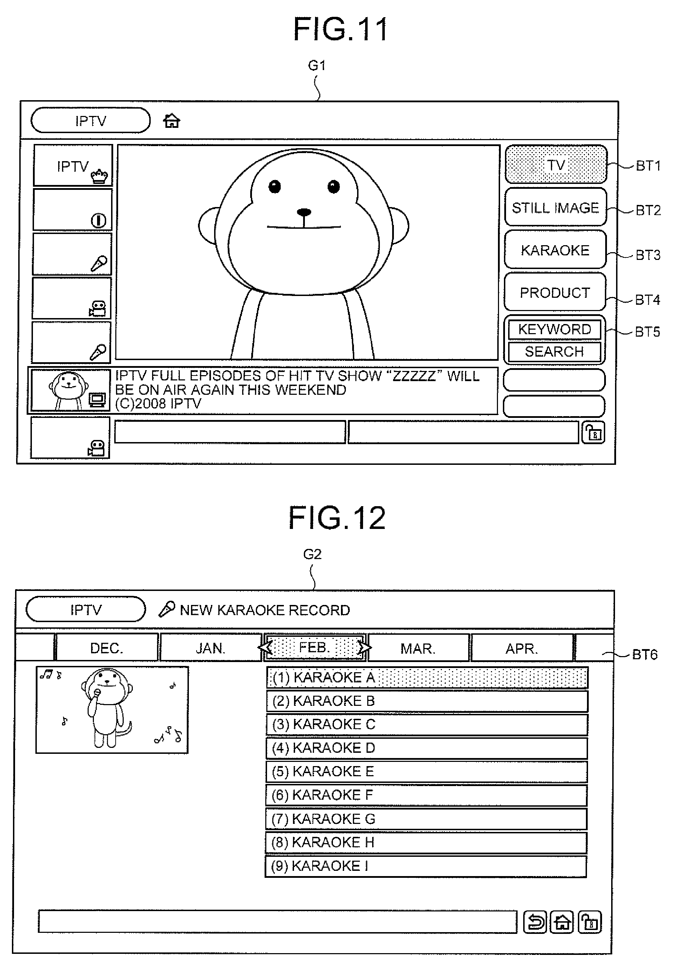

The operation receiver 101 receives user's operation. More specifically, when a user pushes a button on the remote controller 90, the operation receiver 101 recognizes the operation and receives an input provided by the operation. For example, when a user retrieves desired content as well as contents related to the desired content from a plurality of contents, the operation receiver 101 receives an input provided by the user through the remote controller 90. More specifically, the user selects content (key content) as a search key using the remote controller 90 from a plurality of contents displayed on the display module 170. The operation receiver 101 receives this selection of the key content. The key content may be content being reproduced or having been reproduced. In this case, when a user pushes a button on the remote controller 90 while content is being reproduced or upon compression of reproduction of content, the operation receiver 101 receives the user's operation as a selection of the key content, i.e., an instruction to retrieve contents. The operation receiver 101 may receive the selection of content to specify it as key content from list information displayed on the display module 170 (see FIG. 12) , which will be described in detail later. The list information indicates pieces of display information of a plurality of contents. The operation receiver 101 may also receive the selection of a word (keyword) to specify it as a search key. Hereinafter, keyword used for search will be referred to as "search key word" to differentiate it from other keywords.

The metadata acquiring module 103 acquires content received by the broadcast receiver 108 or the communication module 180 and the metadata, and stores them in the content DB 152. Besides, when the operation receiver 101 receives the selection of key content, the metadata acquiring module 103 acquires meta data of all contents (the key content and other contents than the key content) . More specifically, for example, the metadata acquiring module 103 acquires the metadata of the contents from the content DB 152. The metadata acquiring module 103 may request the IPTV server 200 for the metadata of the contents to acquire the metadata. The metadata acquiring module 103 may also acquire the metadata of the contents from the EPG 151.

The metadata retriever 102 retrieves, when the operation receiver 101 receives the selection of the key content, metadata of the key content from the metadata of the contents acquired by the metadata acquiring module 103. The metadata retriever 102 then outputs the metadata of the key content to the relation calculator 104. The metadata retriever 102 also retrieves, based on the metadata of the key content acquired from the metadata acquiring module 103, metadata of other contents to be the objects of calculation by the relation calculator 104 as to the relation to the metadata of the key content. The metadata retriever 102 then outputs the metadata of the other contents to the relation calculator 104. The metadata that the metadata retriever 102 outputs to the relation calculator 104 upon receipt of the selection of the key content is related to an item determined by the item determination module 109.

The metadata retriever 102 also outputs, when the operation receiver 101 receives the selection of the key content, the metadata of all the contents acquired by the metadata acquiring module 103 to the display information generator 105.

The relation calculator 104 calculates the relation of the other contents to the key content based on the metadata of the key content and the metadata of the other contents received from the metadata retriever 102 for each item contained in the metadata. Examples of the item include title and channel. More specifically, the relation calculator 104 calculates relation RM using the following Equation 1:

$$\text{relation RM} = \sum_{n=1}^{N} fa_n(M11(n), M21(n)) \times wa_n \qquad (1)$$

where N represents the total number of metadata items acquirable by the metadata acquiring module 103, M11 represents the metadata of the key content, M21 represents the metadata of any of the other contents, and (n) represents n-th metadata acquired by the metadata acquiring module 103. Further, $fa_n(M11(n), M21(n))$ is a function that returns the relation between metadata $M11(n)$ and $M21(n)$ as $RM_n$, and $Wa_n$ is a value (n = 1, ..., N) indicating weight.

As described above, although various types of information is acquired as the metadata, the metadata will be described below as including a set of five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of the following five relations $RM_1$ to $RM_5$:

$RM_1 = fa_1$ (recoding date and time of metadata M11, recoding date and time of metadata M21)
$RM_2 = fa_2$ (title of metadata M11, title of metadata M21)
$RM_3 = fa_3$ (channel of metadata M11, channel of metadata M21)
$RM_4 = fa_4$ (genre of metadata M11, genre of metadata M21)
$RM_5 = fa_5$ (cast of metadata M11, cast of metadata M21)

For example, $fa_1$ is a function that is larger for a smaller difference in recoding date and time between the metadata M11 and m21 and is smaller for a larger difference in the recoding date and time. More specifically, $fa_1$ may be represented by using a relational expression as follows:

$$MO1/|rec\_data\ (M11)\ -\ rec\_data\ (M21)|$$

where rec_data (x) is a function that uniquely converts recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as $g(x) = MO1/|X|$ is applied to $fa_1$ (M11, M21) = g(rec_data (M11) - rec_data (M21)), it is not so limited. The function g may be a function with L2 norm as, for example, $g(x) = MO1/||x||$. In this case, $||x||$ is the square root of the sum of squares of the differences between elements that constitute X.

Other functions such as a sigmoid function and a gamma function may be applied to g(x). Besides, while an example is described above in which the function is larger as the recoding dates and times of the metadata M11 and M21 are closer, it is not so limited. The function may be smaller as the recoding dates and times of the metadata M11 and M21 are closer. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", two letters "CD" are contained in both the titles. If the title of the metadata M11 is "ABCDE" and that of the metadata M11 is "FGHIE", one letter is contained in both the titles. Therefore, the value of $fa_2$ is larger in the former case. The relation may be determined based on a keyword contained in the brief description of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE #2" and "ABCDE #3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value MO2 is an arbitrary constant number. In addition, if the metadata M11 and M21 are of contents of affiliate channels, the value of $fa_3$ may be set to a different value. For example, $fa_3$ may be a function that returns value MO2/2 when the metadata M11 and M21 are of contents of affiliate channels. Further, $fa_3$ may be a function that returns value MO2/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value MO3 if the metadata M11 and M21 both belong to the same genre "sports" and otherwise takes value O. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value 2xMO4 (MO4: an arbitrary constant number), and it may be a function that takes value 0 if there is no same person casted for both the contents. Besides, someone in the cast may be a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value MO4/2.

In a similar fashion, the relation between groups or between people featured in the contents may be defined. For example, when the groups XX and YY belong to the same office or agency, $fa_5$ may be a function that returns value MO4/4 In this case, the relation between a person and a group or between a person, a group, and an office may be defined in the metadata or may be obtained from an external server (information site) .

While an example is described above in which the relation is calculated not differentiating people in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, if the second person on the cast list for the metadata M11 is the third person on the cast list for the metadata M21, the relation may be weighted by 1/2 with respect to the second person for the metadata M11 and may further be weighted by 1/3 with respect to the third person for the metadata M21. That is, the relation may be weighted by 1/2x1/3 = 1/6. Besides, the relation may be weighted differently with respect to a star playing a leading role based on information on the cast or the like. For example, the derived relation may be double-weighted with respect to the star.

With the above calculation of the relation RM, based on the title and the name of, for example, pl ayer, composer, lyric writer, and label, content with more of the same title and names as key content may be assigned higher relation. Using keywords obtained by dividing genre, lyric, title, or the like into words, content with more of the same keywords as key content may be assigned higher relation. Further, based on the range or the register, content with the highest key, the lowest key, and the average key similar to those of key content may be assigned higher relation. Still further, based on the date and time, and the place, content with the date and time, and the place similar to those of key content may be assigned higher relation.

The display information generator 105 generates display information representing the details of the key content and the other contents based on the metadata of the key content and that of the other contents output from the metadata retriever 102. More specifically, for example, based on the metadata of content of video data stored in the content DB 152, the display information generator 105 adds such items as a title to the representative image of the video data to generate display information to be displayed on the display module 170. Further, for example, based on the metadata of content of video data obtained from the IPTV server 200, the display information generator 105 adds such items as a title to the representative image of the video data to generate display information to be displayed on the display module 170. Still further, for example, based on the EPG 151, the display information generator 105 generates display information to be displayed on the display module 170 to indicate the title of a TV program, the broadcast date and time, the channel, the brief description of the TV program, and the like.

The display information will now be described in detail. FIGS. 3A and 3B illustrate examples of the display information representing the details of content. FIG. 3A illustrates display information C1 of the key content generated based on, for example, the metadata of video data stored in the content DB 152. As illustrated in FIG. 3A, the display information C1 includes a representative image C1-1 of the content and title C1-2 "L358∆*6" of the content (video). On the other hand, FIG. 3B illustrates the display information C1 of the key content generated based on, for example, the EPG 151. As illustrated in FIG. 3B, the display information C1 includes the channel C1-3, title C1-4 "Lunchtime Comedy Show" with brief description "Great line up of comedians invite you to enjoy a noon of hilarious entertainment" of the content (video) , and broadcast date and time C1-5.

The display controller 106 reproduces and displays content output from the video reproducer 107 on the display module 170.

As described above, when the operation receiver 101 receives an instruction from a user to retrieve content, the display controller 106 displays list information indicating a list of display information of key content and that of other contents related to the key content on the display module 170 to allow the user to retrieve the content.

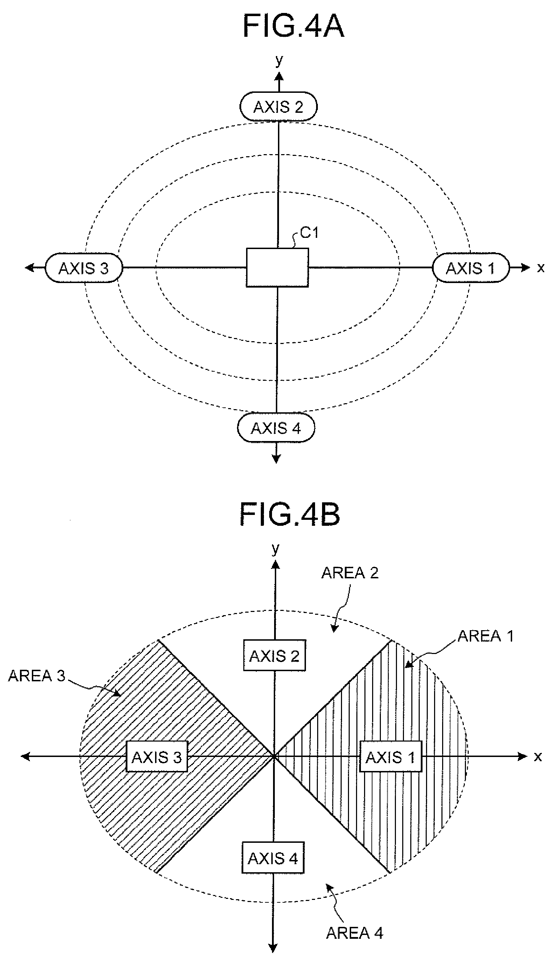

In the list information, the display information of the key content is arranged in a desired position. With the position of the display information of the key content as the center, pieces of the display information of the other contents are arranged to form concentric polygons, for example, correspondingly to the directions of operation on an operation button of the remote controller 90 such as an arrow key. The screen is divided into predetermined areas for respective items in radial directions from the center. The pieces of the display information of the other contents are arranged in the predetermined areas such that the one with higher relation is closer to the center. Additionally, in the list information, the display information of the key content is displayed in the largest size, and the display information of the other contents is displayed smaller as the distance from the center increases. A description will be given of the operation of displaying the display information. FIGS. 4A to 8 are schematic diagrams for explaining the operation of displaying the display information.

As illustrated in FIG. 4A, the display controller 106 arranges display information C1 of the key content at a desired position. The display controller 106 then sets, using the position of the display information C1 as the center, four axes (axes 1 to 4) in the positive x-axis direction, the positive y-axis direction, the negative x-axis direction, and the negative y-axis direction, respectively. Thereafter, the display controller 106 assigns each item contained in the metadata of the selected key content to one of the four axes. The item assigned to each axis is determined by the item determination module 109 according to the type of the key content. The details will be described later. Referring to FIG. 2, for example, as items contained in the metadata, the "title" of a TV program (content), the "cast" of the TV program, a "keyword" for search contained in the brief description of the TV program, and the "genre" of the TV program are each assigned to one of the four axes. A user can use the items assigned to the axes as indices for searching for contents related to the key content.

As illustrated in FIG. 4B, the display controller 106 divides the display area into predetermined areas (areas 1 to 4) in radial directions from the display information C1 in the center. The display area is divided at an arbitrary angle, for example, an angle of 90°, such that each of the predetermined areas includes one of the axes assigned one of the items. In this manner, the display controller 106 generates the predetermined areas (area 1 to 4) each including one of the axes.

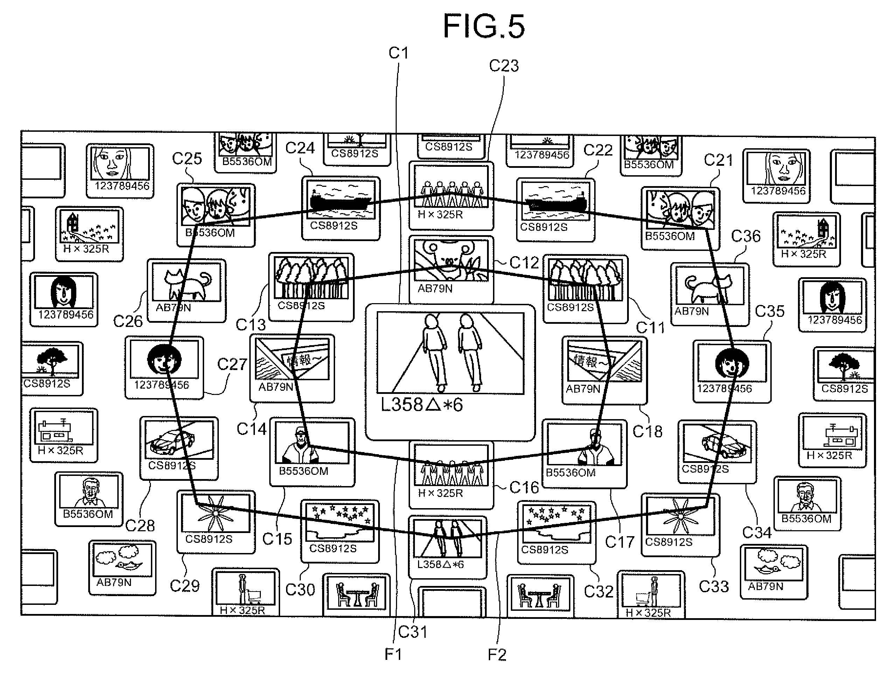

As illustrated in FIG. 5, the display controller 106 arranges pieces of display information of other contents on a plurality of octagons F1, F2, ..., which are concentrically formed around the display information C1 of the key content as the center, correspondingly to up, down, left, and right directions of the operation button on the remote controller 90. More specifically, the display controller 106 arranges eight pieces of display information C11 to C18 of other contents on the corners of the octagon F1. Further, the display controller 106 arranges on the corners of the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of operation. In the same manner as just described, the display controller 106 arranges on the corners of each octagon eight pieces of display information of other contents, and also eight pieces of display information of other contents between the respective pieces. With this arrangement of display information of other contents, with respect to any piece of display information, other pieces of display information are arranged along the up, down, left, or right directions of operation.

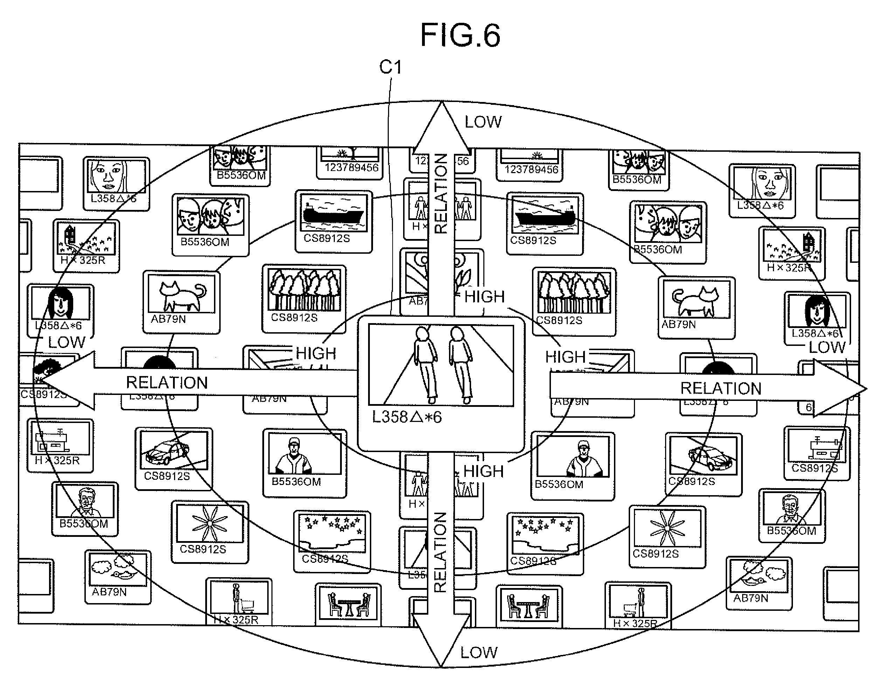

At this time, as illustrated in FIG. 6, the display controller 106 arranges pieces of display information of other contents with higher relation to the key content closer to the center at which is arranged the display information C1 of the key content. In other words, pieces of display information of other contents with lower relation to the key content are arranged more distant from the center. That is, in the example of FIG. 5, the display controller 106 arranges pieces of display information of other contents with the highest relation to the key content on the octagon F1 . The display controller 106 also arranges pieces of display information of other contents on the octagon F2 and other octagons (not illustrated) in descending order of relation to the key content.

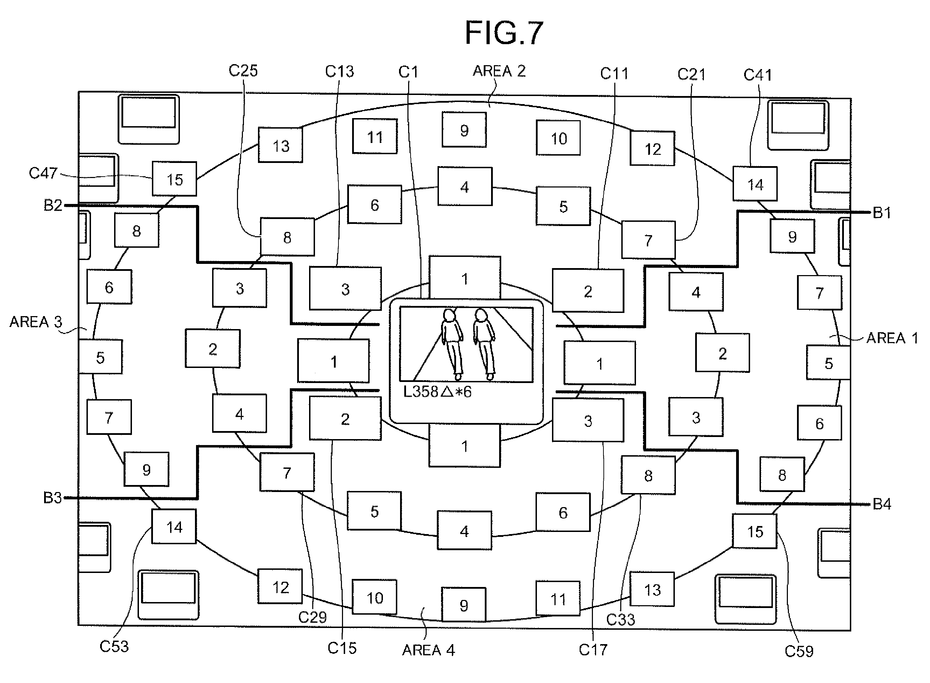

In addition, the display controller 106 arranges pieces of display information of other contents in each of the predetermined areas previously obtained for each item in descending order of relation to the key content. That is, the display controller 106 classifies the display information of other contents by the items assigned to the areas (axes), respectively. More specifically, as illustrated in FIG. 7, for respective items assigned to the area 1 defined by boundary lines B1 and B4, the area 2 defined by boundary lines B1 and B2, the area 3 defined by boundary lines B2 and B3, and the area 4 defined by boundary lines B3 and B4, the display controller 106 arranges pieces of display information of other contents in the order of numbers assigned to the pieces in FIG. 7. Thus, with respect to each of the items, the pieces of the display information of the other contents can be arranged from around the center in descending order of relation to the key content.

In the example of FIG. 7, pieces of the display information C11, C21 and C41 are located in positions capable of belonging to both the areas 1 and 2. For example, the pieces of the display information C11, C21 and C41 may be set to belong to either one of the areas or items in which more contents with relation to the key content higher than a predetermined threshold are present than in the other. In FIG. 7, since more other contents with relation higher than the predetermined threshold are present in the area 2 than in the area 1, the pieces of the display information C11, C21 and C41 belong to the area 2. The same is applied to pieces of the display information C13, C25, C47, C15, C29, C53, C17, C33, and C59.

While an area to which display information displayed near a boundary line belongs is described above as being determined based on the degree of relation to the key content, this is by way of example and not of limitation. For example, display information displayed near a boundary line may belong to an area having more contents related to the key content than the other.

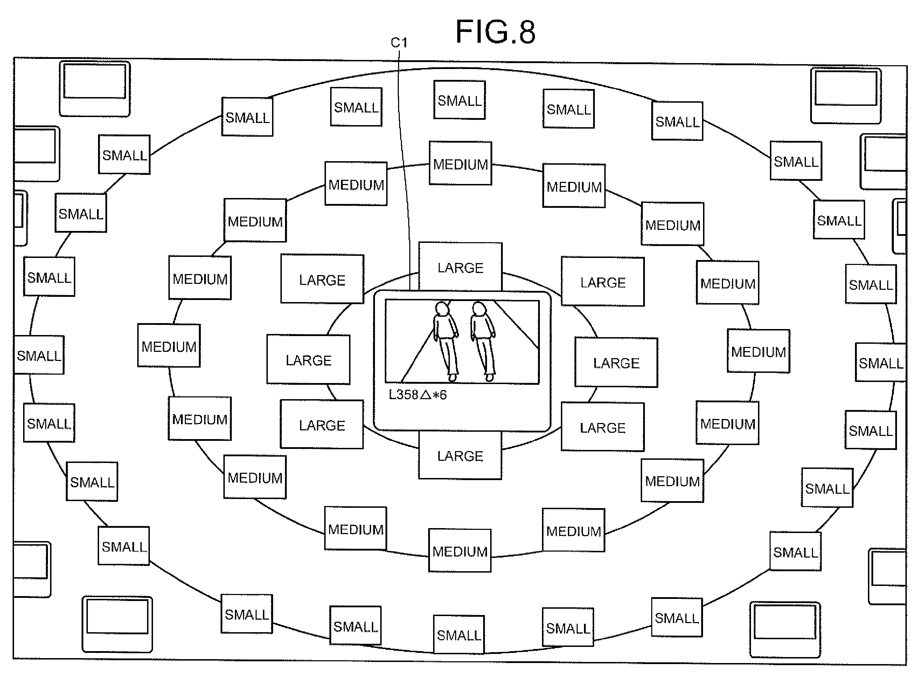

Further, as illustrated in FIG. 8, the display controller 106 displays the display information of the key content in the largest size, and the display information of the other contents smaller as the distance from the center increases. When display information of another content than the key content belongs to a plurality of areas, the display controller 106 displays the display information in one of the areas so that the same display information is not displayed concurrently in the different areas. More specifically, when display information of the other content belongs to the areas 1 and 2, the display information is displayed in only one area assigned an item with respect to which the other content has higher relation to the key content.

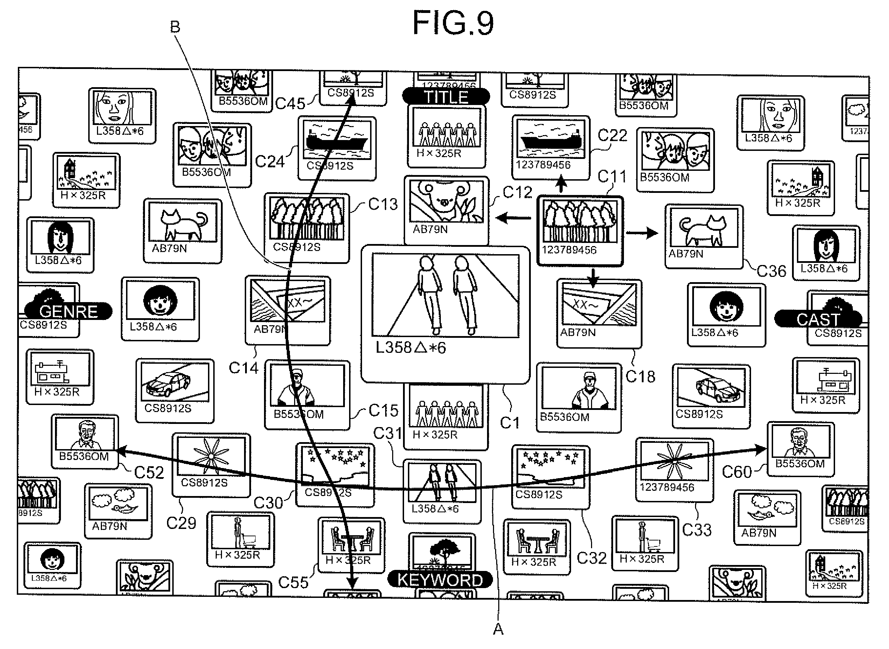

In this manner, the display controller 106 generates list information in which are arranged the display information C1 of the key content and the display information C11, ... of the other contents, and displays the list information on the display module 170. Incidentally, the display controller 106 stores in advance the display position and size of the display information, and, after the calculation of the relation to the key content, sequentially arranges pieces of the display information of the other contents each in a predetermined size. FIG. 9 illustrates an example of the list information in which are arranged the display information C1 of the key content and the display information C11, ... of the other contents. In the list information of FIG. 9, items "Title", "Cast", "Keyword", and "Genre" are displayed on the upside, right side, downside, and left side of the screen, respectively. Further, with the display information C1 of the key content as the center, pieces of the display information of the other contents are arranged from around the center toward the outside.

As described above, according to the embodiment, pieces of display information of other contents than key content are arranged along up, down, left, and right directions of operation. Therefore, in the example of FIG. 9, if the display information C30 is focused content for search, upon receipt of an instruction for left-right movement through the operation button on the remote controller 90, the focus on the display information C30 moves in directions indicated by a double-head arrow A. Similarly, if the display information C30 is focused content for search, upon receipt of an instruction for up-down movement through the operation button, the focus on the display information C30 moves in directions indicated by a double-head arrow B. Additionally, for example, if the cursor moves one space to the right in response to an instruction when the focus is on the display information C11, the focus moves to the display information C36. Similarly, if the cursor moves one space in the up, left, or down direction in response to an instruction, the focus moves from the display information C11 to the display information C22, C12, or C18. Thus, the operation using the operation button such as an arrow key on the remote controller 90 can be facilitated.

The focused content changed as above may be specified as key content. In this case, with respect to the changed focused content specified as new key content, the relation of other contents is calculated again. The displaymodule 170 displays list information in which are arranged display information of the new key content and that of the other contents.

When the operation receiver 101 receives the selection of key content, the item determination module 109 determines items according to the type of the key content so that the relation calculator 104 can calculate the relation with respect to the items based on the metadata. In other words, the item determination module 109 determines items to classify display information of other contents than key content to arrange the display information of the other contents in radial directions from the key content at the center according to the relation to the key content. From the metadata that the metadata retriever 102 outputs to the relation calculator 104, the item determination module 109 outputs metadata related to determined items to the relation calculator 104. Thus, the relation calculator 104 calculates the relation with respect to the items determined by the item determination module 109.

The item determination module 109 may determine the type of key content by analyzing the key content or metadata related to the key content. More specifically, for example, when key content contains audio data and the metadata contains information such as player, composer, lyric writer, title, and lyrics, the item determination module 109 determines that the key content is music content. Meanwhile, when key content is still image data according to the joint photographic experts group (JPEG) or the like and the metadata is Exif information, the item determination module 109 determines that the key content is still image content. When the metadata contains information such as product name, manufacturer (brand), keyword, and attribute (category) of the customer, the item determination module 109 determines that the key content is product content.

The item determination module 109 may also determine the type of key content based on information stored in advance in ROM or the like. In this case, the ROM or the like stores in advance items with respect to which the relation is to be calculated for each type of key content. Referring to the items, the item determination module 109 determines items according to the type of key content.

For example, the ROM or the like may store items such as "vocal range (key)", "generation", "keyword", "singer (player)", and the like for music content to calculate the relation. Besides, the ROM or the like may store items such as "person", "place", "date", "keyword", and the like for still image content. The ROM or the like may store items such as "name", "keyword", "category", "brand", and the like for product content. Accordingly, when key content is music content, "vocal range (key)", "generation", "keyword", and "singer" are determined as items with respect to which the relation is to be calculated.

The item determination module 109 may determine items according to the type of key content by notifying the IPTV server 200 or the server 201 of the type of the key content and receiving a response thereto. That is, items for the calculation of the relation are preset in the IPTV server 200 or the server 201 with respect to each type of key content. The item determination module 109 may obtain the preset information from the IPTV server 200 or the server 201 and determine items according to the type of key content.

For example, there is a case where a user inputs a search keyword as a search key and content related to the search keyword is retrieved. In such a case, the item determination module 109 notifies the IPTV server 200 or the server 201 of the search keyword to obtain therefrom items as to the search keyword with respect to which the relation is to be calculated. The IPTV server 200 or the server 201 may calculate the trend of items related to each search keyword and update items for the calculation of the relation with frequently-appearing items with respect to each search keyword. In this case, the item determination module 109 determines items consistent with the recent trends as to a search keyword as items for the calculation of the relation.

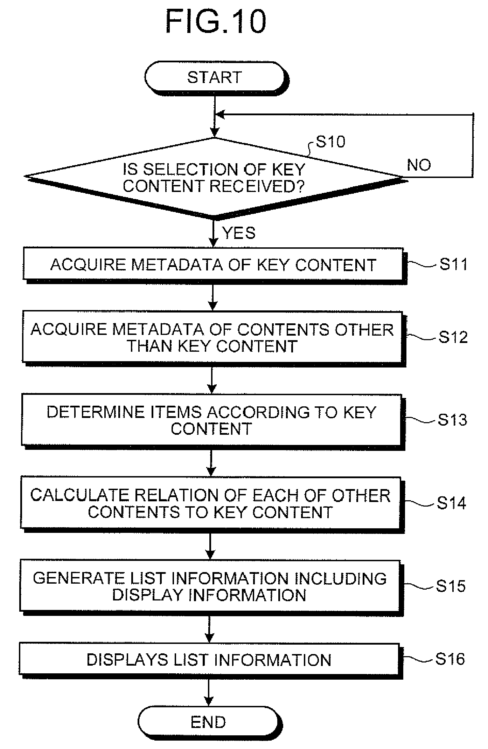

A description will now be given of the process of displaying display information performed by the display device 100. FIG. 10 is a flowchart of the process of displaying the display information performed by the display device 100.

The operation receiver 101 waits for receiving the selection of key content thorough the operation button of the remote controller 90 (S10) . Upon receipt of the selection of key content (Yes at S10), the metadata acquiring module 103 acquires metadata of the selected key content (S11) . The metadata acquiring module 103 then acquires metadata of contents other than the key content (S12).

Next, the item determination module 109 determines items according to the type of the key content so that the relation calculator 104 calculates the relation based on the metadata with respect to the items (S13). The relation calculator 104 calculates the relation of the other contents to the key content with respect to each of the items determined by the item determination module 109 (S14) . The display controller 106 generates list information indicating display information of the key content and that of the other contents such that pieces of the display information of the other contents are arranged according to their relation to the key content (S15). The display controller 106 then displays the list information on the display module 170 (S16).

Thus, the display module 170 displays list information, in which, with the position of the display information of the key content, i.e., a search key, as the center, the pieces of the display information of the other contents are arranged to form concentric polygons correspondingly to the directions of operation on the operation button. The pieces of the display information of the other contents are arranged from around the center in descending order of relation to the key content. Further, the list information displayed by the display module 170 is divided into predetermined areas each corresponding to one of items according to the type of the key content, and the pieces of the display information of the other contents are each arranged in corresponding one of the predetermined areas. Thus, the user can easily retrieve content highly related to the key content with respect to the items according to the key content from numerous contents.

Examples of display of the display module 170 will be described with reference to FIGS. 11 to 16. FIGS. 11 and 12 illustrates examples of display screens. More specifically, FIG. 11 illustrates a display screen G1 before key content is selected. FIG. 12 illustrates a list display screen G2 before key content is selected.

As illustrated in FIG. 11, the display screen G1 before key content is selected displays selection buttons BT1 to BT4 to select the type of content and an input button BT5 to input a search keyword. The user selects one of the selection buttons BT1 to BT4 using the remote controller 90 to select the type of content. Further, the user inputs a search keyword through the input button BT5 using the remote controller 90. While the display screen G1 is illustrated in FIG. 11 as a display screen for selecting key content from the connected IPTV server 200 by way of example, it may be a display screen for selecting content stored in advance in the content DB 152.

For example, if "karaoke" is selected by the selection button BT3, as illustrated in FIG. 12, the display module 170 displays the list display screen G2 displaying a list of "karaoke" contents. The user moves a cursor BT6 using the remote controller 90 to select key content from the list of the "karaoke" contents.

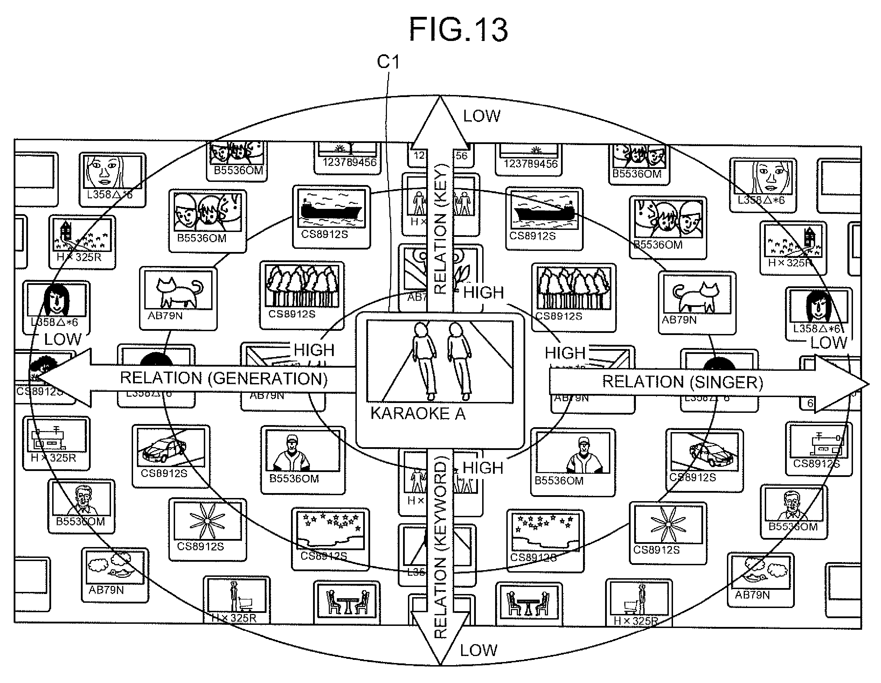

FIG. 13 illustrates an example of display when key content is "karaoke" content. As illustrated in FIG. 13, if key content is music content such as "karaoke" content, for example, "key", "generation", "keyword", and "singer" are determined as items with respect to which the relation is to be calculated. Thus, display information of content highly related to key content "karaoke A" is arranged close to the display information C1 of the key content at the center with respect to each of the determined items.

With this, the user can easily retrieve content related to the "karaoke A" selected as key content with respect to items according to music content such as "key", "generation", "keyword", and "singer". For example, the user may wish to retrieve a song of the same singer, key, generation, etc. as the "karaoke A" selected as key content or a song similar in lyrics to the "karaoke A". The display device 100 is capable of retrieving content according to such user's wish.

Key content need not necessarily be selected from a list of contents provided by the IPTV server 200 or those stored in the content DB 152 displayed on the list display screen G2. Music content being reproduced on the display device 100 may be selected as key content. Further, key content may be selected from music contents scheduled to be reproduced. For example, if predetermined operation is performed on the remote controller 90 while the display device 100 is reproducing music content stored in the content DB 152 through the display module 170 or a speaker (not illustrated), the display device 100 retrieves content using the music content being reproduced as key content. Meanwhile, if content is selected from a list of music contents scheduled to be reproduced displayed on the list display screen G2 through the remote controller 90, the display device 100 retrieves content using the selected content being reproduced as key content.

In this manner, content can be retrieved using music content being reproduced or selected one of music contents scheduled to be reproduced as key content. Thus, the display device 100 is capable of retrieving content according to such user's wish that related contents be sequentially played or he/she be able to continuously sing Christmas songs by "karaoke".

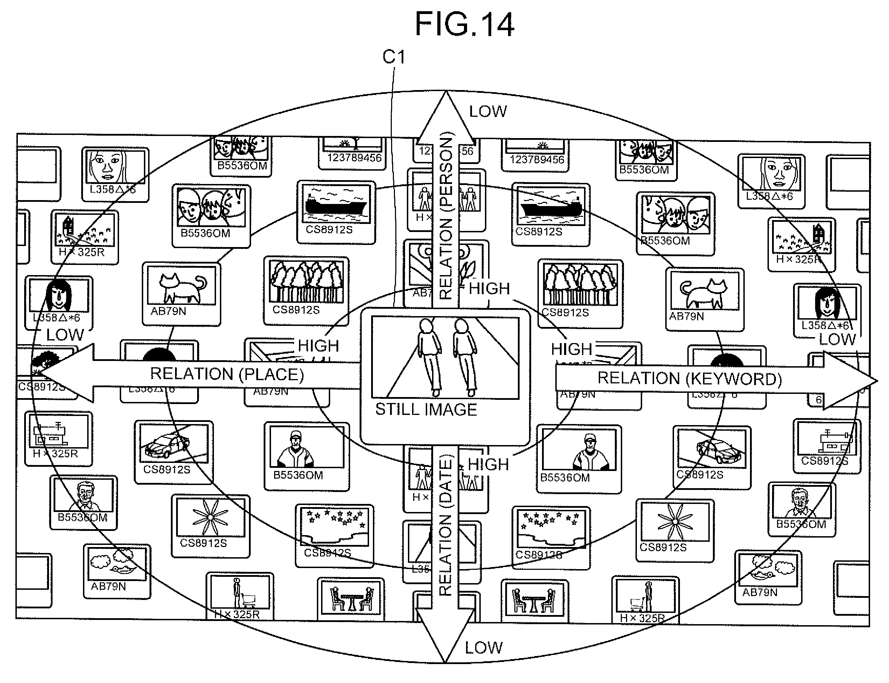

FIG. 14 illustrates an example of display when key content is still image content. As illustrated in FIG. 14, if key content is still image content, for example, "person", "place", "date", and "keyword" are determined as items with respect to which the relation is to be calculated. Thus, display information of content highly related to key content "still image" is arranged close to the display information C1 of the key content at the center with respect to each of the determined items. With this, the user can easily retrieve content related to the "still image" selected as key content with respect to items according to still image content such as "person", "place", "date", and "keyword".

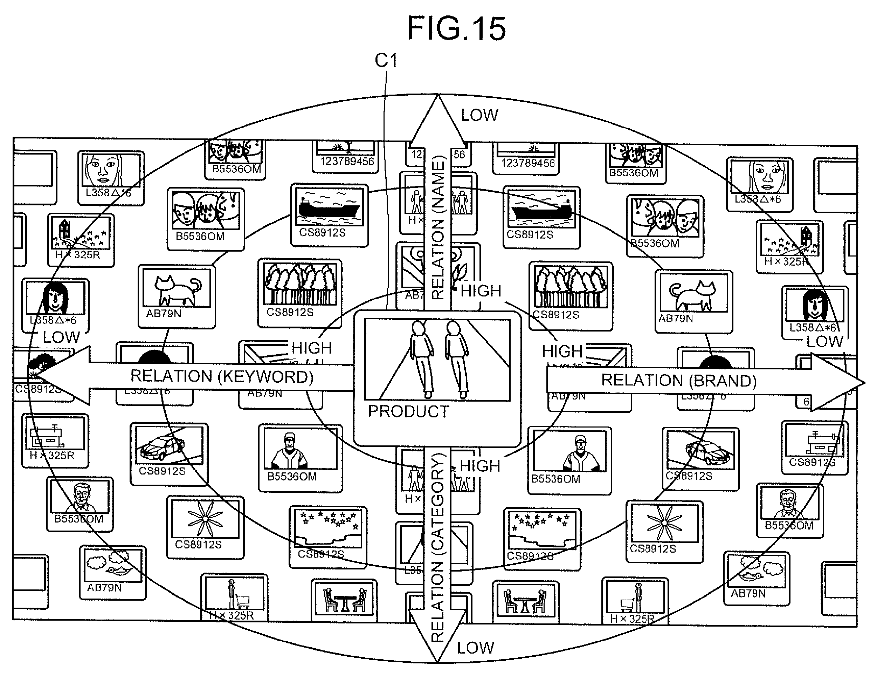

FIG. 15 illustrates an example of display when key content is product content. As illustrated in FIG. 15, if key content is product content, for example, "name", "keyword", "category", and "brand" are determined as items with respect to which the relation is to be calculated. Thus, display information of content highly related to key content "product" is arranged close to the display information C1 of the key content at the center with respect to each of the determined items. With this, the user can easily retrieve content related to the "product" selected as key content with respect to items according to product content such as "name", "keyword", "category", and "brand".

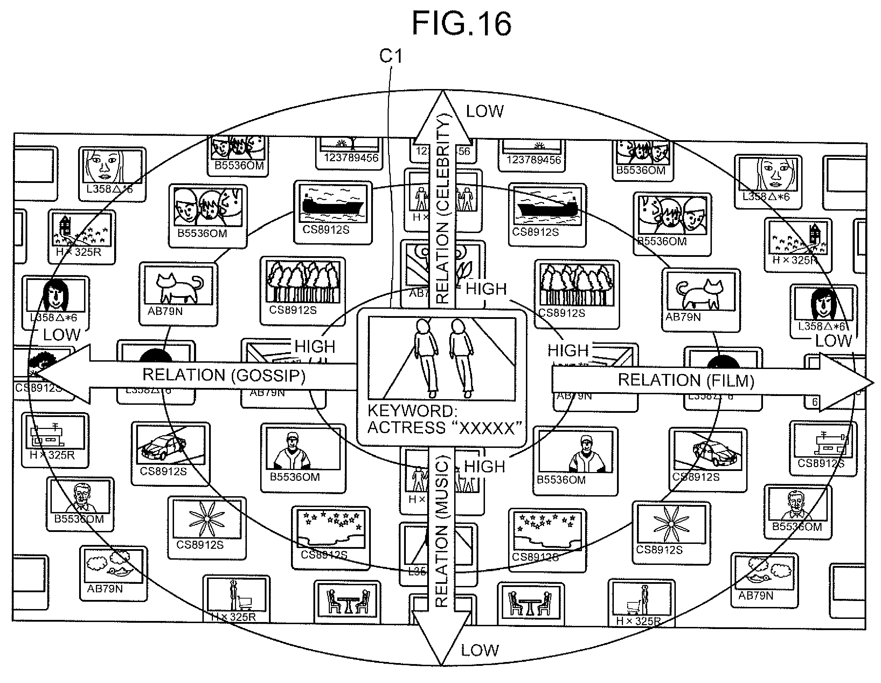

FIG. 16 illustrates an example of display when a search keyword is input. As illustrated in FIG. 16, when "actress xxxxxx" is input as a search keyword, "celebrity", "gossip", "music", and "film" according to the "actress xxxxxx" are determined as items with respect to which the relation is to be calculated. Thus, display information of content highly related to the "actress xxxxxx" is arranged close to the display information C1 of the "actress xxxxxx" at the center with respect to each of the determined items. With this, the user can easily retrieve content related to the "actress xxxxxx" input as a search keyword with respect to items according to the search keyword such as "celebrity", "gossip", "music", and "film".

As described above, according to the embodiment, in the display device 100, when the operation receiver 101 receives the selection of key information as a search key (key content or keyword), the item determination module 109 determines items with respect to which the relation between the key information and other contents is to be calculated. The display screen of the display module 170 is radially divided from the center into predetermined areas each corresponding to one of the items determined by the item determination module 109. Display information of the key information is arranged at the center, and pieces of display information of the other contents are each arranged in corresponding one of the predetermined areas in descending order of the relation to the key information. Thus, the display device 100 is capable of displaying related contents in different directions with respect to appropriate items according to the type of key information as a search key.

The computer program may be executed on a computer to realize the same function as the display device 100. The computer program may be provided to the computer as being stored in advance in ROM or the like. The computer program may also be provided as being stored in a computer-readable storage medium, such as a compact disc-read only memory (CD-ROM), a flexible disk (FD), a compact disc recordable (CD-R), and a digital versatile disc (DVD), as a file in an installable or executable format.

The computer program may also be stored in a computer connected via a network such as the Internet so that it can be downloaded therefrom via the network. The computer program may also be provide or distributed via a network such as the Internet.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A display device comprising:

   a storage module (152) configured to store a plurality of contents and metadata corresponding to each of the contents;
   an operation module (101) configured to receive operation to specify key information as a search key;
   an item determination module (109) configured to determine, according to type of the key information, items with respect to which relation between the key information and each of second contents other than the key information is to be calculated;
   a relation calculator (104) configured to calculate the relation according to similarity in metadata of the key information and each of the second contents with respect to each of the items; and

a display module (170) configured to display a display screen that is radially divided from a center into predetermined areas each corresponding to one of the items, in which the key information is arranged at the center and each of the second contents is arranged in corresponding one of the predetermined areas according to the relation.

2. The display device of Claim 1, wherein

the key information is content including music content, still image content, and product content, or a search keyword, and

the item determination module (109) is configured to determine the items based on items set in advance for the content or the search keyword.

3. The display device of Claim 2, wherein, when the key information is music content, the items determined by the item determination module (109) include vocal range, generation, keyword, and player.

4. The display device of Claim 2, wherein, when the key information is still image content, the items determined by the item determination module (109) include person, place, date and time, and keyword.

5. The display device of Claim 2, wherein, when the key information is product content, the items determined by the item determination module (109) include name, keyword, attribute, and manufacturer.

6. A display device comprising:

an operation module (101) configured to receive operation to specify key information as a search key;

an item determination module (109) configured to determine, according to type of the key information, items with respect to which relation between the key information and each of second contents other than the key information is to be calculated; and

a display module (170) configured to display a display screen that is radially divided from a center into predetermined areas each corresponding to one of the items, in which the key information is arranged at the center and each of the second contents is arranged in corresponding one of the predetermined areas according to the relation.

7. A display method applied to a display device comprising a storage module configured to store a plurality of contents and metadata corresponding to each of the contents, the display method comprising:

an operation module receiving operation to specify key information as a search key;

an item determination module determining, according to type of the key information, items with respect to which relation between the key information and each of second contents other than the key information is to be calculated;

a relation calculator calculating the relation according to similarity in metadata of the key information and each of the second contents with respect to each of the items; and

a display module displaying a display screen that is radially divided from a center into predetermined areas each corresponding to one of the items, in which the key information is arranged at the center and each of the second contents is arranged in corresponding one of the predetermined areas according to the relation.

FIG.1

# FIG.2

TITLE: LUNCHTIME COMEDY SHOW
CHANNEL: 00
DATE: AUG. 1, 2008 12:00-12:40
CAST: XXXXX, YYYYY
SUBTITLE: GREAT LINE UP OF COMEDIANS INVITE YOU TO
ENJOY NOON OF HILARIOUS ENTERTAINMENT
GENRE: COMEDY

# FIG.3A

C1

C1-1

C1-2 — L358△*6

# FIG.3B

C1-3    C1

00

LUNCHTIME COMEDY SHOW

GREAT LINE UP OF
COMEDIANS INVITE YOU TO
ENJOY NOON OF
HILARIOUS
ENTERTAINMENT

C1-4

C1-5 — 8/1 12:00-12:40

# FIG.4A

# FIG.4B

FIG.5

FIG.6

# FIG.7

L358△*6

AREA 1
AREA 2
AREA 3
AREA 4

B1 B2 B3 B4

C1 C11 C13 C15 C17 C21 C25 C29 C33 C41 C47 C53 C59

EP 2 357 803 A1

# FIG.8

FIG.9

EP 2 357 803 A1

# FIG.10

START

S10
IS SELECTION OF KEY
CONTENT RECEIVED? → NO

YES

ACQUIRE METADATA OF KEY CONTENT — S11

ACQUIRE METADATA OF CONTENTS OTHER
THAN KEY CONTENT — S12

DETERMINE ITEMS ACCORDING TO KEY
CONTENT — S13

CALCULATE RELATION OF EACH OF OTHER
CONTENTS TO KEY CONTENT — S14

GENERATE LIST INFORMATION INCLUDING
DISPLAY INFORMATION — S15

DISPLAYS LIST INFORMATION — S16

END

# FIG.11

G1

| IPTV | 🏠 |

| IPTV 👑 | | TV | BT1 |
| Ⓘ | | STILL IMAGE | BT2 |
| 🎤 | | KARAOKE | BT3 |
| 📹 | | PRODUCT | BT4 |
| 🎤 | | KEYWORD SEARCH | BT5 |

IPTV FULL EPISODES OF HIT TV SHOW "ZZZZZ" WILL BE ON AIR AGAIN THIS WEEKEND
(C)2008 IPTV

# FIG.12

G2

| IPTV | 🎤 NEW KARAOKE RECORD |

| DEC. | JAN. | ◁ FEB. ▷ | MAR. | APR. | BT6 |

(1) KARAOKE A
(2) KARAOKE B
(3) KARAOKE C
(4) KARAOKE D
(5) KARAOKE E
(6) KARAOKE F
(7) KARAOKE G
(8) KARAOKE H
(9) KARAOKE I

# FIG.13

# FIG.14

# FIG.15

# FIG.16

Europäisches
Patentamt

European
Patent Office

Office européen
des brevets

**EUROPEAN SEARCH REPORT**

Application Number

EP 10 18 6230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 785 814 A2 (SQUARE ENIX KK TRADING CO LTD [JP]) 16 May 2007 (2007-05-16) <br> * abstract; figures 1, 3 * <br> * paragraphs [0004] - [0009], [0032], [0049], [0147] * <br> * the whole document * <br> ----- | 1-7 | INV. <br> H04N5/445 |
| | | | TECHNICAL FIELDS SEARCHED (IPC) |
| | | | H04N |

The present search report has been drawn up for all claims

| Place of search | Date of completion of the search | Examiner |
|---|---|---|
| Munich | 21 January 2011 | Prange, Stefan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 18 6230

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2011

| Patent document cited in search report | | Publication date | Patent family member(s) | | Publication date |
|---|---|---|---|---|---|
| EP 1785814 | A2 | 16-05-2007 | JP | 4536638 B2 | 01-09-2010 |
| | | | JP | 2007122496 A | 17-05-2007 |
| | | | US | 2007106949 A1 | 10-05-2007 |

For more details about this annex : see Official Journal of the European Patent Office, No. 12/82

**EP 2 357 803 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009080580 A